# EUROPÄISCHE PATENTSCHRIFT

(11) **EP 3 924 209 B1**
(45) Veröffentlichungstag und Bekanntmachung des Hinweises auf die Patenterteilung: **21.08.2024**
(21) Anmeldenummer: 20701708.8
(22) Anmeldetag: 17.01.2020
(51) Int. Cl.: B60K 35/10, B60K 37/00

(54) **BEDIENVORRICHTUNG MIT EINEM BERÜHRUNGSEMPFINDLICHEN ELEMENT UND VERFAHREN ZUM ERFASSEN EINER BEDIENGESTE**
OPERATOR CONTROL DEVICE WITH A TOUCH-SENSITIVE ELEMENT AND METHOD FOR DETECTING AN OPERATOR CONTROL GESTURE
DISPOSITIF DE COMMANDE COMPRENANT UN ÉLÉMENT TACTILE ET PROCÉDÉ POUR LA DÉTECTION D'UN GESTE DE COMMANDE

(30) Priorität: 14.02.2019 DE 102019202006
(43) Veröffentlichungstag der Anmeldung: 22.12.2021
(73) Patentinhaber: VOLKSWAGEN AKTIENGESELLSCHAFT, 38440 Wolfsburg (DE)
(72) Erfinder: SCHMIDTKE, Stefan, 38442 Wolfsburg (DE); NEUGEBAUER, Moritz, 10439 Berlin (DE); KÖTTER, Nils, 30161 Hannover (DE); SEITZ, Gordon, 38468 Ehra-Lessien (DE)
(86) Internationale Anmeldenummer: PCT/EP2020/051133
(87) Internationale Veröffentlichungsnummer: WO 2020/164857

(56) Entgegenhaltungen:
- EP-A2- 2 818 353
- EP-A2- 3 237 250
- DE-A1- 102015 200 007

## Beschreibung

Die vorliegende Erfindung betrifft eine Bedienvorrichtung mit einem länglichen berührungsempfindlichen Bedienelement, welches zumindest in ein mittleres Segment und zwei beidseitig neben dem mittleren Segment angeordnete Außensegmente unterteilt ist. Ferner weist die Bedienvorrichtung eine Erfassungseinrichtung auf, die eingerichtet ist, auf einer Bedienfläche des Bedienelements ausgeführte Bediengesten zu erfassen. Ferner betrifft die Erfindung ein Fahrzeug mit einer solchen Bedienvorrichtung. Des Weiteren betrifft die Erfindung ein Verfahren zum Erfassen einer Bediengeste und zum Erzeugen eines Steuersignals. Moderne Fahrzeuge bieten oft eine Vielzahl von Funktionseinrichtungen, die über eine Nutzerschnittstelle bedient werden können. Dabei ergibt sich die Herausforderung, die Nutzerschnittstelle so zu gestalten, dass der Fahrer einfach und intuitiv die verschiedenartigen Funktionseinrichtungen bedienen kann, wobei gleichzeitig der für die Nutzerschnittstelle benötigte Bauraum gering sein soll.

Aus der WO 2016/102268 A1 ist ein Infotainmentsystem mit einer Anwenderschnittstelle zur Handhabung von Favoriten mittels einer Fingerleiste bekannt. Die Fingerleiste ist dabei in zwei distale Schaltflächen gegliedert, welche einen Wischgestenbereich beidseitig begrenzen.

Das Dokument EP 2 818 353 A2 offenbart eine Bedienvorrichtung mit einem länglichen berührungsempfindlichen Bedienelement, welches zumindest in ein mittleres Segment und zwei beidseitig neben dem mittleren Segment angeordnete Außensegmente unterteilt ist, und einer Erfassungseinrichtung, die eingerichtet ist, auf einer Bedienfläche des Bedienelements ausgeführte Bediengesten zu erfassen,die Erfassungseinrichtung eingerichtet ist, sowohl auf dem mittleren Segmente als auch auf beiden Außensegmenten jeweils verschiedene Bediengesten, die jeweils sowohl eine Gleitgeste als auch eine Tippgeste umfassen, unterscheidbar zu erfassen und die Bedienvorrichtung eine mit der Erfassungseinrichtung gekoppelte Steuereinrichtung umfasst, die eingerichtet ist, ein der erfassten Bediengeste zugeordnetes Steuersignal für eine der erfassten Bediengeste zugeordnete Funktion zu erzeugen.

Der vorliegenden Erfindung liegt die Aufgabe zugrunde, eine Bedienvorrichtung, ein Fahrzeug und ein Verfahren der eingangs genannten Art bereitzustellen, die es ermöglichen, mit einem Bedienelement, welches wenig Bauraum benötigt, eine Vielzahl von Funktionseinrichtungen flexibel steuern zu können.

Erfindungsgemäß wird diese Aufgabe durch eine Bedienvorrichtung mit den Merkmalen des Anspruchs 1, und ein Verfahren mit der Merkmalen des Anspruchs 8 gelöst. Vorteilhafte Ausgestaltungen und Weiterbildungen ergeben sich aus den abhängigen Ansprüchen.

Die erfindungsgemäße Bedienvorrichtung ist dadurch gekennzeichnet, dass die Steuereinrichtung eingerichtet ist, einen Bedienkontext zu erfassen und das der erfassten Bediengeste zugeordnete Steuersignal für die der erfassten Bediengeste zugeordnete Funktion in Abhängigkeit von dem erfassten Bedienkontext zu erzeugen, wobei die Bediengesten globale Bediengesten und kontextabhängige Bediengesten umfassen, wobei die Steuereinrichtung eingerichtet ist, einer erfassten globalen Bediengeste unabhängig vom empfangenen Bedienkontext ein der globalen Bediengeste zugeordnetes Steuersignal für eine der globalen Bediengeste zugeordnete Funktion zu erzeugen und für eine erfasste kontextabhängige Bediengeste in Abhängigkeit von dem Bedienkontext ein Steuersignal zu erzeugen, welches einer Funktion zugeordnet ist, die von dem empfangenen Bedienkontext abhängt, wobei die Erfassungseinrichtung eingerichtet ist, kontextabhängige Bediengesten nur bei Berührungen des mittleren Segments des Bedienelements zu erfassen.

Durch die Möglichkeit, auf den zumindest drei separierten Segmenten des Bedienelements sowohl Gleitgesten als auch Tippgesten zu erfassen, kann das längliche Bedienelement sehr kompakt, das heißt bauraumsparend, ausgeführt werden, wobei gleichzeitig verschiedene Bedienmöglichkeiten durch unterscheidbare Gesten bereitgestellt werden.

Unter einer Gleitgeste wird in dieser Schrift verstanden, dass ein Betätigungselement das betätigte Segment des Bedienelements bei einer Startposition berührt, danach auf dem betätigten Segment zu einer Endposition bewegt wird und dort die Berührung des Betätigungselements von dem Bedienelement wieder gelöst wird. Eine Gleitgeste entspricht somit einer Wischgeste, die auf einer Bedienfläche eines berührungsempfindlichen Bedienelements ausgeführt wird.

Unter einer Tippgeste wird in dieser Schrift verstanden, dass das Betätigungselement das betätigte Segment des Bedienelements bei einer Position berührt und die Berührung nach einem Betätigungszeitintervall wieder gelöst wird. Das Betätigungszeitintervall kann dabei relativ kurz sein. In diesem Fall wird eine sogenannte Tap-Geste ausgeführt. Ist das Betätigungszeitintervall relativ lang, wird eine sogenannte Longpress-Geste ausgeführt.

Die Segmente des länglichen Bedienelements sind insbesondere so angeordnet, dass ein erstes Außensegment in Längsrichtung des Bedienelements auf einer Seite des mittleren Segments und ein zweites Außensegment in Längsrichtung des Bedienelements auf der anderen Seite des mittleren Segments angeordnet ist. Das mittlere Segment ist somit zwischen den beiden Außensegmenten angeordnet.

Bei dem Betätigungselement kann es sich beispielsweise um die Fingerspitze eines Nutzers handeln. Es können jedoch auch mehrere Betätigungselemente, beispielsweise zwei oder mehr Fingerspitzen des Nutzers, eine Bediengeste ausführen. In diesem Fall kann die Erfassungseinrichtung unterscheiden, mit wie vielen Betätigungselementen welche Bediengeste ausgeführt wurde. Die Bediengesten umfassen somit eine einfache Berühr-Gleitgeste, eine Mehrfachberühr-Gleitgeste, eine Einfachberühr-Tippgeste und/oder eine Mehrfachberühr-Tippgeste. In Abhängigkeit von einer solchen erfassten Bediengeste kann die Steuereinrichtung dann ein entsprechendes Steuersignal erzeugen.

Die Erfassungseinrichtung kann somit eine Vielzahl von Bediengesten, welche verschiedene Typen von Gleitgesten und Tippgesten umfassen, unterscheidbar erfassen. Beispielsweise kann die Steuereinrichtung dann ein erstes Steuersignal für eine erste Funktion erzeugen, wenn eine Gleitgeste erfasst wurde, und ein zweites Steuersignal für eine zweite Funktion erzeugen, wenn eine Tippgeste erfasst wurde.

Bei der erfindungsgemäßen Bedienvorrichtung wird ein Hardwareelement, nämlich das längliche berührungsempfindliche Bedienelement, für die Bedienung einer Vielzahl von Funktionen verwendet. Durch die körperliche Segmentierung des Bedienelements in mehrere Bedienbereiche kann eine verbesserte Ergonomie erreicht werden.

Gemäß einer Ausgestaltung der erfindungsgemäßen Bedienvorrichtung ist dem Steuersignal ein Parameter der zugeordneten Funktion zugeordnet. Die Steuereinrichtung ist insbesondere eingerichtet, den Wert des Parameters in Abhängigkeit von einer Länge der Gleitgeste und/oder einer Position der Tippgeste auf dem Bedienelement zu bestimmen. Alternativ oder zusätzlich ist die Steuereinrichtung eingerichtet, den Wert des Parameters in Abhängigkeit von einer Geschwindigkeit der Gleitgeste zu bestimmen. Weiter alternativ oder zusätzlich kann die Steuereinrichtung eingerichtet sein, den Wert des Parameters in Abhängigkeit von einer Dauer eines Berühr-Zeitintervalls der Tippgeste zu bestimmen. Auf diese Weise lassen sich vielfältige unterschiedliche Funktionen durch ein Bauraum sparendes Bedienelement mittels der erfindungsgemäßen Bedienvorrichtung bedienen.

Bei dem Parameter kann es sich beispielsweise um den Wert einer Temperatur, den Wert einer Lautstärke, den Wert einer Vergrößerung einer Darstellung, den Wert eines Bildlaufs für eine Liste und/oder den Wert eines Sollwinkels für einen Anhänger eines Fahrzeugs handeln. Diese Werte können mittels der erfindungsgemäßen Bedienvorrichtung sehr einfach und intuitiv durch Gleit- und/oder Tippgesten eingestellt werden.

Gemäß der erfindungsgemäßen Bedienvorrichtung ist die Steuereinrichtung eingerichtet, einen Bedienkontext zu erfassen, um das der erfassten Bediengeste zugeordnete Steuersignal für die der erfassten Bediengeste zugeordnete Funktion in Abhängigkeit von dem erfassten Bedienkontext zu erzeugen. Der Bedienkontext kann parallel auch auf einer Anzeigefläche visualisiert werden, so dass die erfindungsgemäße Bedienvorrichtung mit der Anzeigevorrichtung zusammenwirkt. Identische auf dem berührungsempfindlichen Bedienelement ausgeführte Bediengesten können somit bei unterschiedlichen Bedienkontexten unterschiedliche Funktionen haben. Ein gewünschter Bedienkontext kann dabei beispielsweise über ein weiteres Bedienelement angesteuert werden. Es ist jedoch auch möglich, dass der gewünschte Bedienkontext über das Bedienelement der erfindungsgemäßen Bedienvorrichtung ausgewählt wird, indem beispielsweise der Bedienkontext in einer Liste ausgewählt wird.

Gemäß der erfindungsgemäßen Bedienvorrichtung umfassen die Bediengesten globale Bediengesten und kontextabhängige Bediengesten. Die Steuereinrichtung kann in diesem Fall eingerichtet sein, einer erfassten globalen Bediengeste unabhängig vom empfangenen Bedienkontext ein der globalen Bediengeste zugeordnetes Steuersignal für eine der globalen Bediengeste zugeordneten Funktion zu erzeugen. Gleichermaßen kann die Steuereinrichtung eingerichtet sein, für eine erfasste kontextabhängige Bediengeste in Abhängigkeit von dem Bedienkontext ein Steuersignal zu erzeugen, welches einer Funktion zugeordnet ist, die von dem empfangenen Bedienkontext abhängig ist. Vorteilhafterweise kann die erfindungsgemäße Bedienvorrichtung auf diese Weise noch flexibler eingesetzt werden, da der Nutzer bestimmte Funktionen kontextunabhängig, das heißt in jeder Bediensituation, erzeugen kann und gleichzeitig durch andere Bediengesten Steuersignale für bestimmte Funktionen erzeugen kann, die in einem aktuellen Bedienkontext stehen.

Vorteilhafterweise ist die Erfassungseinrichtung eingerichtet, kontextabhängige Bediengesten nur bei Berührungen des mittleren Segments des Bedienelements zu erfassen.

Bei globalen Bediengesten kann es sich beispielsweise um Funktionen zum Einstellen eines Klimaparameters und/oder einer Lautstärke handeln. Die kontextabhängigen Bediengesten können beispielsweise Funktionen betreffen, mit denen ein Kartenzoom eingestellt wird, ein Bildlauf in einer Liste erzeugt wird und/oder ein Sollwinkel eines Anhängers eingestellt wird. Gemäß einer Ausgestaltung der erfindungsgemäßen Bedienvorrichtung ist das Bedienelement durch einen haptisch wahrnehmbaren Segmenttrenner, z. B. eine Erhebung und/oder Vertiefung, in das mittlere Segment und die beiden Außensegmente unterteilt. Auf diese Weise kann der Nutzer zwischen den Segmenten des Bedienelements durch haptische Wahrnehmung unterscheiden, ohne das Bedienelement bei der Betätigung betrachten zu müssen. Diese Ausgestaltung ist insbesondere bei einem Einsatz in einem Fahrzeug von Vorteil, da bei einer Betätigung durch den Fahrer dieser seinen Blick bei der Bedienung nicht vom Fahrgeschehen abwenden muss.

Die Erfindung betrifft ferner ein Fahrzeug, insbesondere ein Kraftfahrzeug, mit einer Bedienvorrichtung wie sie vorstehend beschrieben wurde. Gemäß einer Ausgestaltung weist das Fahrzeug ferner eine benachbarte zur Bedienvorrichtung angeordnete Anzeigevorrichtung auf. Auf diese Weise ist es möglich, Funktionen von Funktionseinrichtungen eines Fahrzeugs auf der Anzeigevorrichtung zu visualisieren und gleichzeitig eine Bedienung dieser Funktionseinrichtungen durch die Bedienvorrichtung zu ermöglichen.

Um eine besonders ergonomische Bedienmöglichkeit in dem Fahrzeug zu ermöglichen, umfasst die Anzeigevorrichtung eine Anzeigefläche, wobei die Anzeigefläche und die Bedienfläche in einer Querschnittsebene einen Winkel einschließen, der in einem Bereich von 160° bis 100° liegt, insbesondere in einem Bereich von 130° bis 110°.

Die Erfindung betrifft des Weiteren ein Verfahren zum Erfassen einer Bediengeste und zum Erzeugen eines Steuersignals. Bei dem Verfahren wird eine auf einer Bedienfläche eines länglichen berührungsempfindlichen Bedienelements ausgeführte Bediengeste erfasst, wobei das Bedienelement zumindest in ein mittleres Segment und zwei beidseitig neben dem mittleren Segment angeordnete Außensegment unterteilt ist, wobei zwischen verschiedenen Bediengesten unterschieden wird und wobei die verschiedenen Bediengesten sowohl auf dem mittleren Segment als auch auf beiden Außensegmenten ausgeführte Bediengesten umfassen, die jeweils sowohl eine Gleitgeste als auch eine Tippgeste umfassen. Ein der erfassten Bediengeste zugeordnetes Steuersignal wird dann für eine der erfassten Bediengesten zugeordnete Funktion erzeugt.

Das erfindungsgemäße Verfahren kann insbesondere mittels der erfindungsgemäßen Bedienvorrichtung ausgeführt werden. Es weist somit auch dieselben Vorteile wie die erfindungsgemäße Bedienvorrichtung auf.

Im Folgenden wird ein Ausführungsbeispiel der erfindungsgemäßen Bedienvorrichtung und des erfindungsgemäßen Verfahrens mit Bezug zu den Zeichnungen erläutert.
- Figur 1: zeigt schematisch den Aufbau eines Ausführungsbeispiels der erfindungsgemäßen Bedienvorrichtung,
- Figur 2: zeigt ein Ausführungsbeispiel der Geometrie und Anordnung der Bedienvorrichtung in einem Fahrzeug und
- die Figuren 3 bis 20: zeigen Beispiele für Bediengesten, welche mittels der erfindungsgemäßen Bedienvorrichtung ausgeführt werden können.

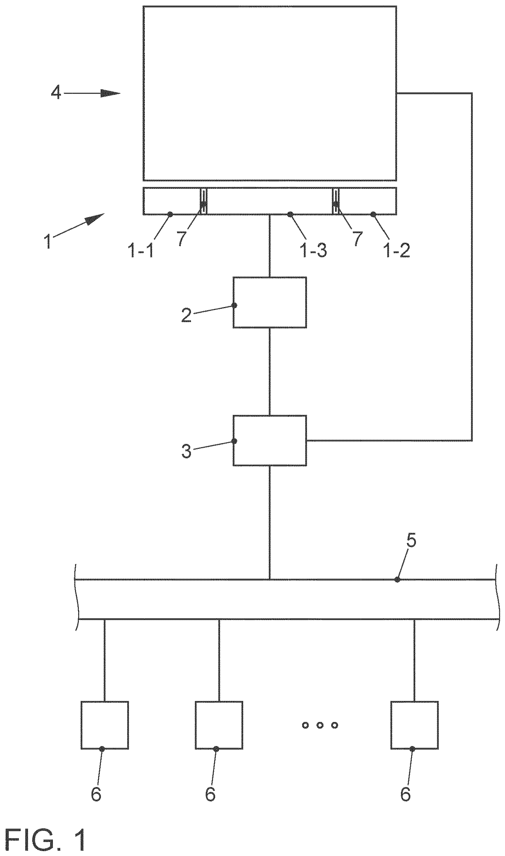

Mit Bezug zu Figur 1 wird der Aufbau des Ausführungsbeispiels der erfindungsgemäßen Bedienvorrichtung erläutert. Die Bedienvorrichtung ist dabei in einem Fahrzeug angeordnet.

Die Bedienvorrichtung umfasst ein längliches berührungsempfindliches Bedienelement 1. Die Längserstreckung des Bedienelements 1 ist somit sehr viel größer als die Quererstreckung. Beispielsweise ist die Längserstreckung zumindest das Vierfache der Quererstreckung des Bedienelements 1. In Längsrichtung des Bedienelements 1 ist dieses in ein mittleres Segment 1-3 und zwei beidseitig neben dem mittleren Segment angeordnete Außensegmente 1-1 und 1-2 unterteilt. Das in Figur 1 links dargestellte Außensegment 1-1 wird auch als erstes Außensegment 1-1 und das in Figur rechts angeordnete Außensegment 1-2 wird auch als zweites Außensegment 1-2 bezeichnet. Das mittlere Segment 1-3 ist somit zwischen dem ersten Außensegment 1-1 und zweiten Außensegment 1-2 angeordnet.

Die Segmente 1-1, 1-2 und 1-3 sind berührungsempfindlich, das heißt, sie weisen eine Bedienfläche auf. Die Berührung der Bedienfläche dieser Segmente 1-1, 1-2, 1-3 durch ein Betätigungselement kann als Bedienvorgang erfasst werden.

Die Segmente 1-1 bis 1-3 sind durch Segmenttrenner 7 voneinander getrennt, das heißt, zwischen dem ersten Außensegment 1-1 und dem mittleren Segment 1-3 ist ein Segmenttrenner 7 angeordnet, und zwischen dem mittleren Segment 1-3 und dem zweiten Außensegment 1-2 ist ein Segmenttrenner 7 angeordnet, wie es in Figur 1 gezeigt ist. Die Segmenttrenner 7 sind so ausgebildet, dass sie haptisch wahrnehmbar sind, wenn ein Nutzer sie mit einem Finger berührt. Die Segmenttrenner 7 werden beispielsweise von Vorsprüngen, Erhebungen und/oder Vertiefungen gebildet.

Das Bedienelement 1 ist mit einer Erfassungseinrichtung 2 gekoppelt. Mittels der Erfassungseinrichtung 2 kann erfasst werden, wenn die Bedienoberfläche des Bedienelements 1 von einem Betätigungselement, beispielsweise einer Fingerspitze eines Nutzers, berührt wird. Dabei kann außerdem die Position der Berührung und die Dauer der Berührung sowie eine etwaige Positionsveränderung beispielsweise bei einer Gleitbewegung über die Bedienoberfläche von der Erfassungseinrichtung 2 erfasst werden. Die Erfassungseinrichtung 2 ist dabei eingerichtet, sowohl auf dem mittleren Segment 1-3 als auch auf beiden Außensegmenten 1-1 und 1-2 jeweils verschiedene Bediengesten unterscheidbar zu erfassen, wobei die Bediengesten sowohl eine Gleitgeste als auch eine Tippgeste umfassen.

Bei einer Gleitgeste berührt ein Betätigungselement das betätigte Segment 1-1 bis 1-3 bei einer Startposition, danach wird das Betätigungselement auf dem betätigten Segment 1-1 bis 1-3 zu einer Endposition bewegt und dort wird die Berührung des Betätigungselements von der Bedienoberfläche des Bedienelements 1 wieder gelöst. Von der Erfassungseinrichtung 2 wird in diesem Fall die Startposition, die Endposition, die Geschwindigkeit, mit welcher das Betätigungselement bei der Gleitgeste auf dem Bedienelement 1 bewegt wird sowie alternativ oder zusätzlich der ausgeübte Druck auf das Betätigungselement 1 erfasst. Bei einer Tippgeste wird hingegen die Berührposition und das Berührzeitintervall, in dem das Betätigungselement das Bedienelement 1 bei dieser Berührposition berührt, erfasst.

Die Erfassungseinrichtung 2 ist mit einer Steuereinrichtung 3 datentechnisch gekoppelt. Die erfasste Bediengeste sowie die vorstehend beschriebenen zugehörigen Parameter der Bediengeste werden von der Erfassungseinrichtung 2 an die Steuereinrichtung 3 übertragen.

Die Steuereinrichtung erzeugt ein der erfassten Bediengeste zugeordnetes Steuersignal für eine der erfassten Bediengeste zugeordnete Funktion, wie es später im Detail erläutert wird. Dieses Steuersignal kann bei einer sogenannten globalen Bediengeste nur von der erfassten Bediengeste selbst abhängen. Ferner hängt das Steuersignal bei sogenannten kontextabhängigen Bediengesten ferner von einem Bedienkontext ab. Dieser Bedienkontext kann der Steuereinrichtung 3 über einen Datenbus 5 des Fahrzeugs übertragen werden. Zu dem Bedienkontext werden dem Nutzer auf einer Anzeigeeinrichtung 4 Informationen angezeigt. Entsprechende Grafikdaten werden von der Steuereinrichtung 3 erzeugt und an die Anzeigevorrichtung 4 übertragen.

Das von der Steuereinrichtung 3 erzeugte Steuersignal wird wiederum an den Datenbus 5 übertragen, welcher es dann an Funktionseinrichtungen 6 des Fahrzeugs weiter verteilt. Auf diese Weise können Funktionen der Funktionseinrichtungen 6 mittels des Bedienelements 1 gesteuert werden. Die Bedienung und Steuerung der Funktionseinrichtungen 6 kann wiederum mittels der Anzeigevorrichtung 4 parallel visualisiert werden.

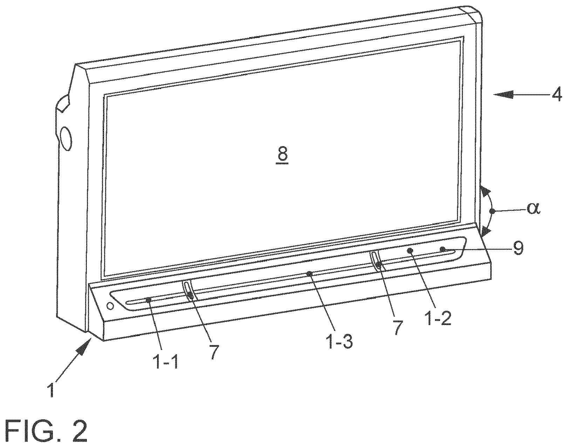

Figur 2 zeigt eine mögliche Anordnung des Bedienelements 1 und der Anzeigevorrichtung 4 in einem Fahrzeug. Die Anzeigevorrichtung 4 umfasst dabei eine Anzeigefläche 8, die in diesem Beispiel im Wesentlichen vertikal ausgerichtet ist. Die Bedienfläche 9 des Bedienelements 1 schließt mit der Anzeigefläche 8 den Winkel α ein. Dieser Winkel α ist bei dem Ausführungsbeispiel 120°.

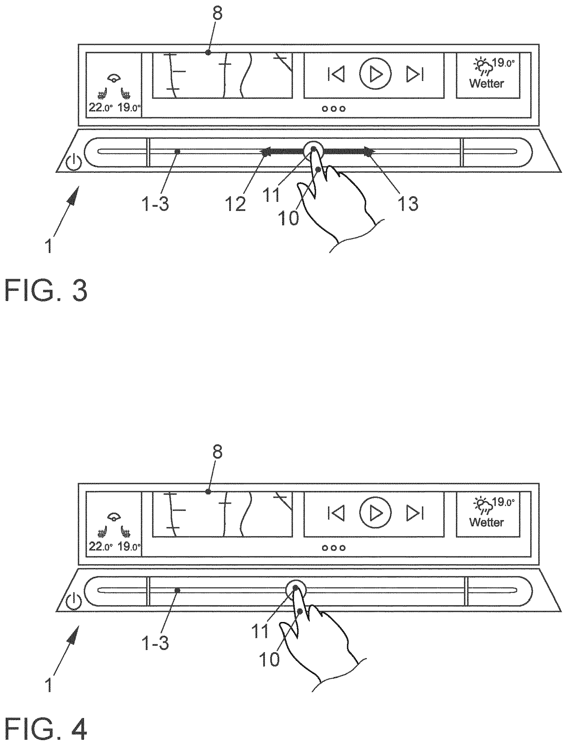

Im Folgenden wird mit Bezug zu den Figuren 3 bis 20 erläutert, wie eine Bedienung über die erfindungsgemäße Bedienvorrichtung erfolgt. Auf diese Weise werden Ausbildungen der mit Bezug zu Figur 1 erläuterten Einrichtungen sowie ein Ausführungsbeispiel des erfindungsgemäßen Verfahrens erläutert:

Figur 3 zeigt eine Ein-Finger-Gleitgeste. Der Nutzer berührt mit einem Finger 10 beziehungsweise einer Fingerspitze das Bedienelement 1 bei einer Berührposition 11 und gleitet dann auf dem Bedienelement 1 entweder in der Gleitrichtung 12 oder in der Gleitrichtung 13. Am Ende der Gleitbewegung wird der Finger 10 wieder von dem Bedienelement 1 gelöst.

Figur 4 zeigt eine Ein-Finger-Tippgeste. In diesem Fall berührt der Nutzer mit seinem Finger 10 das Bedienelement 1 bei der Berührposition 11 für ein bestimmtes Berührzeitintervall und löst danach wieder die Berührung des Bedienelements 1.

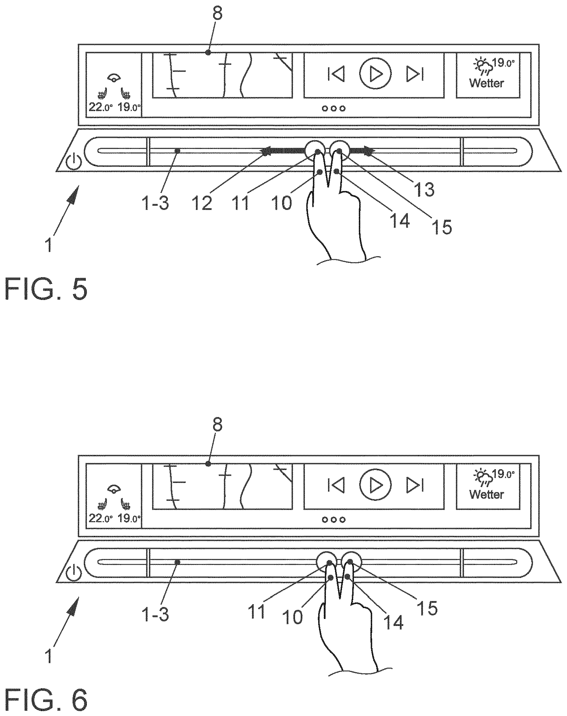

Figur 5 zeigt eine Zwei-Finger-Gleitgeste. In diesem Fall berührt der Nutzer mit zwei Fingern 10 und 14 gleichzeitig das Bedienelement 1 bei den Berührpositionen 11 und 15. Die Berührpositionen 11 und 15 sind dabei voneinander abgrenzbar, so dass sich die Zwei-Finger-Geste von einer Ein-Finger-Geste abgrenzen lässt. Anschließend bewegt der Nutzer beide Finger 10, 14 gleichzeitig in eine Gleitrichtung 12 oder eine Gleitrichtung 13. Der Abstand der Berührpositionen 11 und 15 bleibt dabei im Wesentlichen unverändert.

In Figur 6 ist eine Zwei-Finger-Tippgeste gezeigt. In diesem Fall berühren zwei Finger 10 und 14 des Nutzers das Bedienelement 1 bei den Berührpositionen 11 und 15. Auch in diesem Fall sind die Berührpositionen 10 und 15 getrennt voneinander erfassbar, um die Zwei-Finger-Geste von der Ein-Finger-Geste zu unterscheiden. Der Nutzer verweilt mit seinen Fingern 10 und 14 für ein Berührzeitintervall auf dem Bedienelement 1 und löst danach wieder die Berührung.

Die mit Bezug zu den Figuren 3 bis 6 erläuterten Bediengesten werden von der Erfassungseinrichtung 2 erfasst. Dabei wird erfasst, auf welchem der Segmente 1-1 bis 1-3 die Bediengeste ausgeführt wurde. Ferner wird erfasst, bei welcher Berührposition 11 oder bei welchen Berührpositionen 11, 15 das Bedienelement berührt wurde und wie sich diese Berührposition 11 oder wie sich diese Berührpositionen 11 und 15 zeitgleich verändert haben.

Im Folgenden wird erläutert, wie sich verschiedene Funktionseinrichtungen 6 des Fahrzeugs mittels des Bedienelements 1 bedienen lassen.

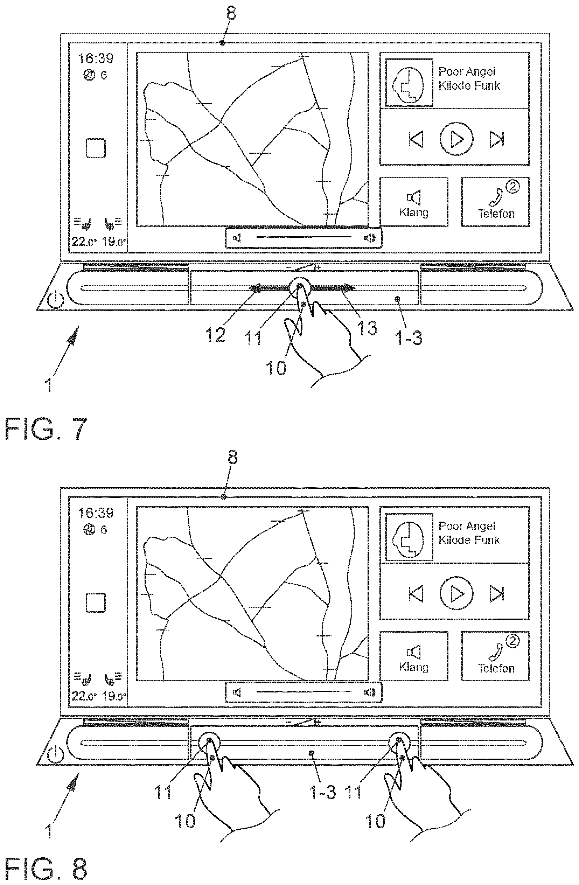

Figur 7 zeigt die Bedienung einer Audioausgabevorrichtung. Es wird in diesem Fall die Lautstärke einer Audioausgabe über Lautsprecher in dem Fahrzeug gesteuert. Es handelt sich um eine globale Bediengeste, das heißt, beim Ausführen dieser Bediengeste wird das Steuersignal zum Verändern der Lautstärke unabhängig vom aktuellen Bedienkontext erzeugt.

Wie in Figur 7 gezeigt, berührt der Nutzer mit einem Finger 10 das mittlere Segment 1-3 bei einer Berührposition 11. Anschließend führt er eine Gleitgeste auf dem mittleren Segment 1-3 in Gleitrichtung 12 oder Gleitrichtung 13 aus. Bei einer Bewegung in der Gleitrichtung 12 wird das Steuersignal so erzeugt, dass die Lautstärke verringert wird. Bei einer Bewegung in Gleitrichtung 13 wird hingegen ein Steuersignal erzeugt, durch welches die Lautstärke erhöht wird. Die Lautstärke wird dabei relativ zu der aktuellen Lautstärke verstellt. Das Maß der Verstellung durch das erzeugte Steuersignal hängt dabei zum einen von der Geschwindigkeit der ausgeführten Gleitgeste und zum anderen der Länge der ausgeführten Gleitgeste ab.

In Figur 8 ist eine alternative Geste gezeigt, mit welcher durch eine globale Bediengeste die Lautstärke verändert werden kann. In diesem Fall führt der Nutzer eine Tippgeste aus. Dabei berührt der Nutzer mit seinem Finger 10 das mittlere Segment 1-3 entweder auf der linken Seite des mittleren Segments 1-3 bei der Berührposition 11 oder auf der rechten Seite des mittleren Segments 1-3 bei der Berührposition 11. Bei einer Tippgeste, welche auf der linken Seite des mittleren Segments 1-3 ausgeführt wird, wird die Lautstärke stufenweise verringert. Bei einer Tippgeste auf der rechten Seite des mittleren Segments 1-3 wird die Lautstärke hingegen erhöht. Die Erfassungseinrichtung 2 unterscheidet dabei zwischen einer kurzen Tippgeste und einer längeren Tippgeste (Longpress). Diese beiden Tippgesten werden durch das Berührzeitintervall unterschieden. Bei einer kurzen Tippgeste wird ein Steuersignal erzeugt, welches die Lautstärke um eine Stufe verringert beziehungsweise erhöht. Bei einer längeren Tippgeste (Longpress) wird die Lautstärke stufenweise erhöht beziehungsweise erniedrigt, solange die Tippgeste ausgeführt wird. Der Finger wird somit auf der Berührposition 11 gehalten, worauf unmittelbar die Lautstärke stufenweise erhöht beziehungsweise erniedrigt wird. Die Veränderung der Lautstärke wird erst beendet, wenn der Nutzer den Finger 10 von dem mittleren Segment 1-3 löst.

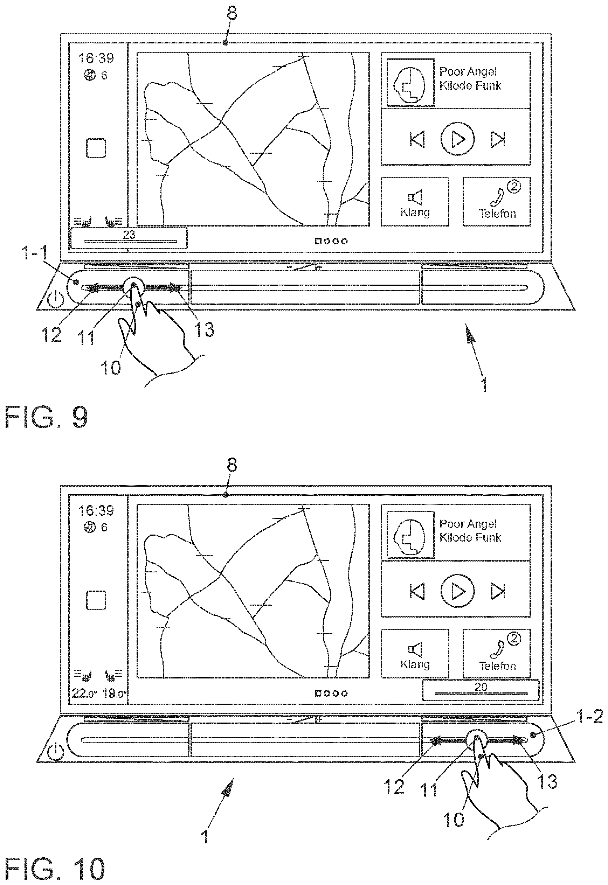

In den Figuren 9 und 10 sind Gleitgesten zum Verändern der Temperatur im Innenraum des Fahrzeugs gezeigt. Auch in diesem Fall handelt es sich um globale Bediengesten. Die Steuersignale werden von der Steuereinrichtung 3 unabhängig vom aktuellen Bedienkontext erzeugt. Wird die Gleitgeste, wie in Figur 9 gezeigt, auf dem ersten Außensegment 1-1 ausgeführt, wird ein Steuersignal zum Verändern der Temperatur auf der Fahrerseite des Fahrzeugs erzeugt. Wird hingegen, wie in Figur 10 gezeigt, die Gleitgeste auf dem zweiten Außensegment 1-2 durchgeführt, wird ein Steuersignal zum Verändern der Temperatur auf der Beifahrerseite des Fahrzeugs erzeugt. Dies gilt für den Fall, dass die Fahrerseite auf der linken Seite des Fahrzeugs angeordnet ist. Ist sie auf der rechten Seite angeordnet, werden die Bediengesten auf dem jeweils anderen Außensegment 1-1, 1-2 ausgeführt.

Der Nutzer berührt mit seinem Finger 10 das Außensegment 1-1 beziehungsweise 1-2 bei der Berührposition 11 und bewegt den Finger 10 in Gleitrichtung 12 oder Gleitrichtung 13. Durch eine Bewegung in Gleitrichtung 12 wird ein Steuersignal zum Verringern der Temperatur auf der Fahrerseite beziehungsweise Beifahrerseite erzeugt. Bei einer Bewegung in Gleitrichtung 13 wird ein Steuersignal zum Erhöhen der Temperatur auf der Fahrerseite beziehungsweise Beifahrerseite erzeugt. Wie bei der Veränderung der Lautstärke ergibt sich eine relative Verstellung zur aktuellen Temperatur. Der verstellte Parameter ist in diesem Fall die Temperatur. Die von dem Steuersignal erzeugte Veränderung dieses Parameters hängt von der Länge und der Geschwindigkeit der jeweiligen Gleitgeste ab.

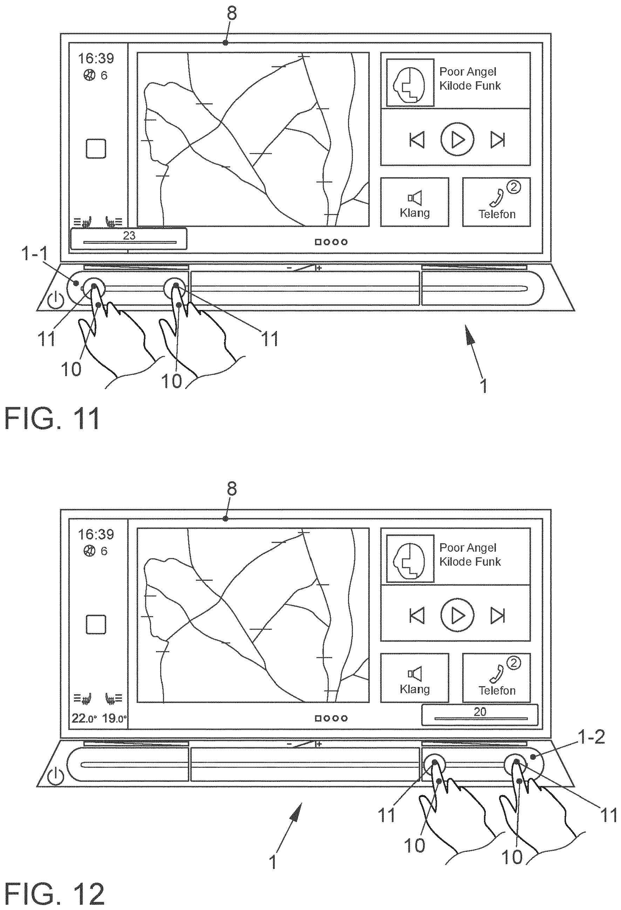

Die Figuren 11 und 12 zeigen eine Alternative zur Veränderung der Temperatur auf der Fahrerseite (Figur 11) oder der Beifahrerseite (Figur 12). Auch in diesem Fall handelt es sich um globale Bediengesten. Das erste Außensegment 1-1 beziehungsweise das zweite Außensegment 1-2 wird mit dem Finger 10 bei einer Berührposition 11 entweder auf der linken Seite des Außensegments 1-1 beziehungsweise 1-2 oder auf der rechten Seite des Außensegments 1-1 beziehungsweise 1-2 berührt. Durch eine Berührung auf der linken Seite wird der Parameter, das heißt die Temperatur, erniedrigt, bei einer Berührung auf der rechten Seite wird der Parameter, das heißt die Temperatur, erhöht. Analog zur Veränderung der Lautstärke als Parameter kann auch hier eine kurze Tippgeste oder eine lange Tippgeste (Longpress) von der Erfassungseinrichtung 2 erfasst werden. Bei einer kurzen Tippgeste wird die Temperatur stufenweise beim Ausführen jeder Tippgeste erhöht beziehungsweise erniedrigt. Bei einer langen Tippgeste wird die Temperatur fortwährend während des Berührzeitintervalls stufenweise erhöht beziehungsweise erniedrigt.

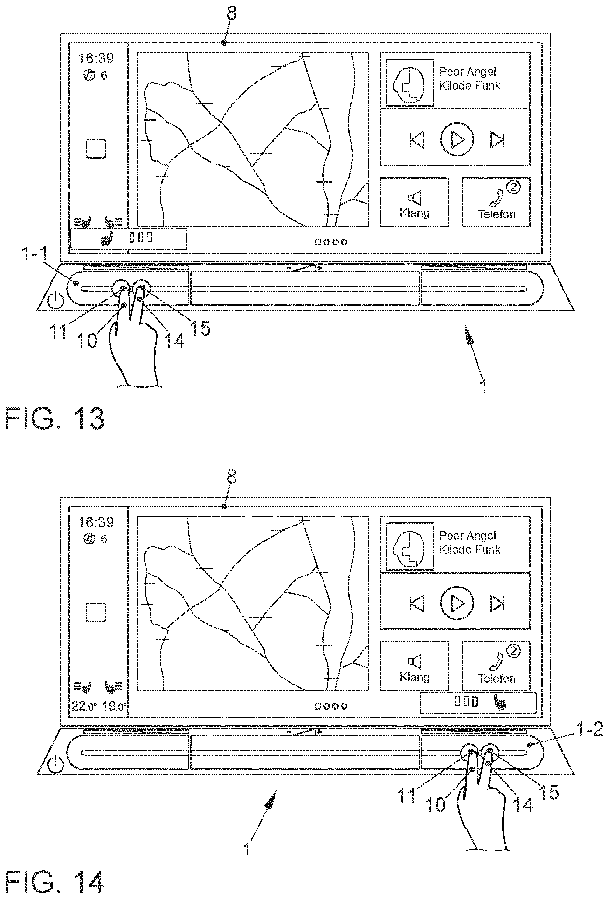

In den Figuren 13 und 14 sind Bediengesten zum Verändern der Temperatur der Sitzheizung für den Sitz des Fahrers beziehungsweise für den Sitz des Beifahrers gezeigt. Der Parameter ist in diesem Fall die Temperatur der Sitzheizung des Fahrersitzes beziehungsweise des Beifahrersitzes. Um die Temperatur des Fahrersitzes zu verändern, wird die Bediengeste auf dem ersten Außensegment 1-1 ausgeführt (Figur 13). Zum Verändern der Temperatur der Sitzheizung des Beifahrersitzes wird die Bediengeste auf dem zweiten Außensegment 1-2 ausgeführt (Figur 14). Erneut handelt es sich um eine globale Bediengeste.

Die Bediengeste ist dabei eine Zwei-Finger-Tippgeste. Durch ein kurzes Antippen des Außensegments 1-1 beziehungsweise 1-2 mit zwei Fingern 10 und 14 bei den beiden Berührpositionen 11 und 15 wird zwischen Stufen der Sitzheizung des Fahrersitzes beziehungsweise Beifahrersitzes gewechselt. Dieser Vorgang wird auch als Toggeln bezeichnet. Mit jeder Tippgeste wird beispielsweise die Temperaturstufe des jeweiligen Sitzes um eine Stufe erhöht. Ist die höchste Stufe erreicht worden, wird auf die niedrigste Stufe gewechselt.

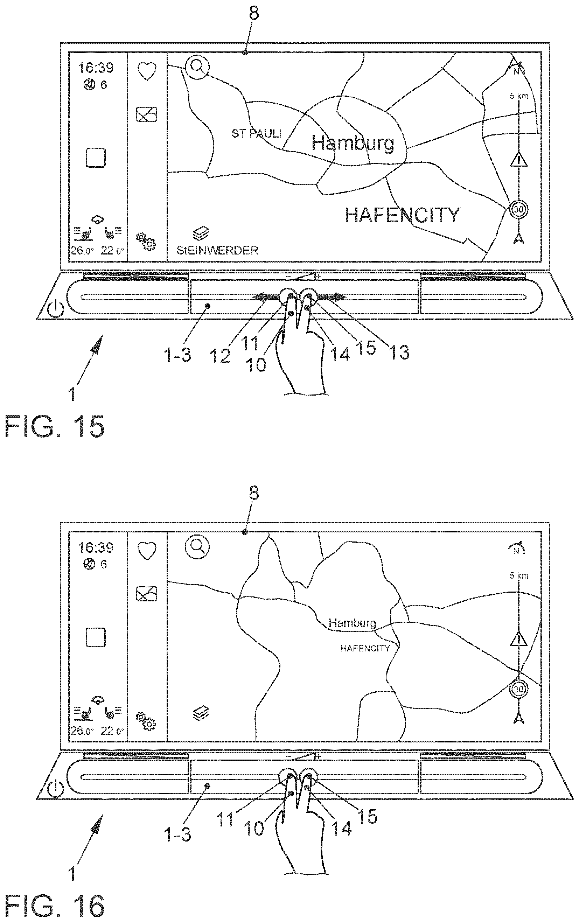

In Figur 15 ist eine Bediengeste zum Verändern der Vergrößerung einer Kartendarstellung, zum Beispiel eines Navigationssystems, gezeigt. In diesem Fall wird das Steuersignal kontextabhängig erzeugt. Das entsprechende Steuersignal wird somit nur dann erzeugt, wenn der Bedienkontext die Bedienung des Navigationssystems ist. Die Steuereinrichtung 3 erzeugt in diesem Fall Grafikdaten zum Anzeigen einer geografischen Karte auf der Anzeigefläche 8, wie es in Figur 15 dargestellt ist. Die Bediengeste wird in diesem Fall auf dem mittleren Segment 1-3 als Zwei-Finger-Gleitgeste ausgeführt. Führt der Nutzer diese Gleitgeste in Gleitrichtung 12 aus, wird der Maßstab der dargestellten Karte verkleinert (Herauszoomen). Wird die Gleitgeste hingegen in Gleitrichtung 13 ausgeführt, wird der dargestellte Maßstab vergrößert (Hereinzoomen).

Führt der Nutzer hingegen, wie in Figur 16 dargestellt, eine Zwei-Finger-Tippgeste auf dem mittleren Segment 1-3 aus, wenn der Bedienkontext des Navigationssystems aktiviert ist, wird die Funktion einer automatischen Maßstabswahl (Autozoom) aktiviert.

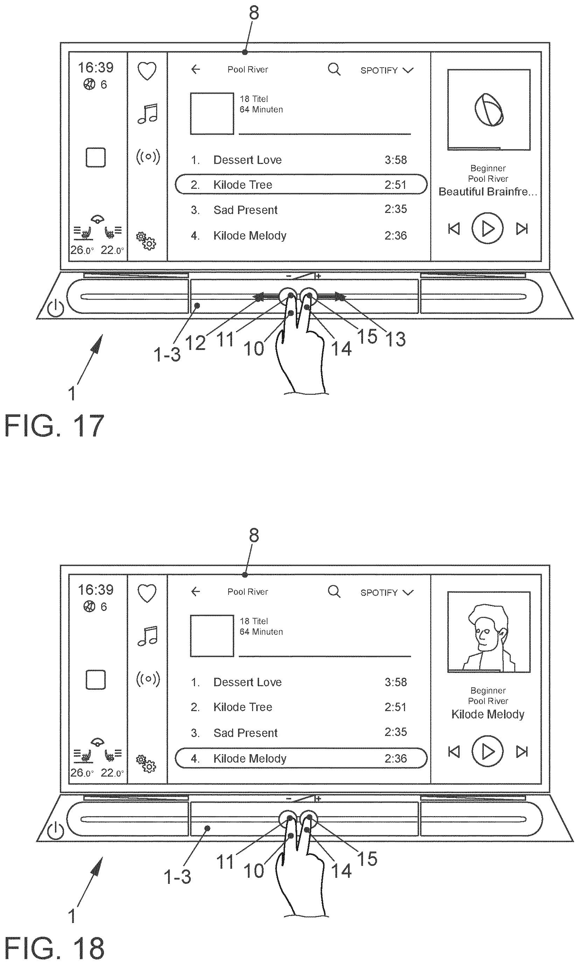

Figur 17 zeigt einen anderen Bedienkontext. In diesem Fall wird eine Liste angezeigt, in welcher ein Listeneintrag markiert oder ausgewählt ist. In dem in Figur 17 gezeigten Fall handelt es sich um eine Liste mit Audiodaten. In diesem Fall kann auf dem mittleren Segment 1-3 eine kontextabhängige Bediengeste ausgeführt werden, und zwar eine Zwei-Finger-Gleitgeste in Gleitrichtung 12 oder Gleitrichtung 13. Auf diese Weise kann der markierte Listeneintrag verändert werden. Eine Gleitgeste in Gleitrichtung 12 führt dazu, dass der nächsthöhere Listeneintrag markiert wird, eine Gleitgeste in Gleitrichtung 13 führt dazu, dass der nächstniedrigere Listeneintrag markiert wird. Gleichzeitig wird ein entsprechender Bildlauf der Liste erzeugt, das heißt die angezeigte Teilmenge der Liste, welche auf der Anzeigefläche 8 angezeigt wird, verändert sich.

Des Weiteren kann in diesem Bedienkontext, wie in Figur 18 gezeigt, auch eine Zwei-Finger-Tippgeste ausgeführt werden. In diesem Fall wird der aktuell markierte Listeneintrag, wie er durch die Zwei-Finger-Gleitgeste angesteuert wurde, ausgewählt, so dass beispielsweise der dem Listeneintrag zugeordnete Musiktitel abgespielt wird.

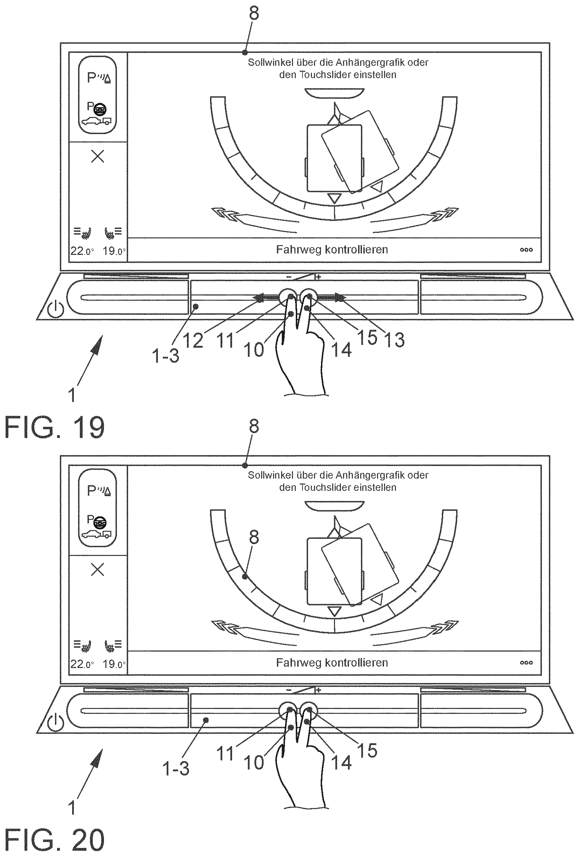

In Figur 19 ist eine weitere kontextabhängige Bediengeste gezeigt. Der Bedienkontext ist in diesem Fall die Einstellung eines Sollwinkels für einen Fahrzeuganhänger. Auf der Anzeigefläche 8 wird eine entsprechende Grafik zum Einstellen dieses Sollwinkels angezeigt. Auf dem mittleren Segment 1-3 wird eine Zwei-Finger-Gleitgeste ausgeführt, mit welcher der Sollwinkel entsprechend der Gleitrichtung 12 beziehungsweise 13 eingestellt werden kann.

Wird in diesem Bedienkontext, wie in Figur 20 gezeigt, eine Zwei-Finger-Tippgeste ausgeführt, wird ein Steuersignal erzeugt, durch welches die aktuelle Fahrtrichtung des Anhängers fixiert wird.

### Bezugszeichenliste

- 1: Bedienelement
- 1-1: linkes Außensegment
- 1-2: rechtes Außensegment
- 1-3: mittleres Segment
- 2: Erfassungseinrichtung
- 3: Steuereinrichtung
- 4: Anzeigevorrichtung
- 5: Datenbus
- 6: Funktionseinrichtungen
- 7: Segmenttrenner
- 8: Anzeigefläche
- 9: Bedienfläche
- 10: Betätigungselement; Finger; erstes Betätigungselement; erster Finger
- 11: Berührposition; erste Berührposition
- 12: Gleitrichtung
- 13: Gleitrichtung
- 14: zweites Betätigungselement; zweiter Finger
- 15: Berührposition; zweite Berührposition

## Patentansprüche

1. Bedienvorrichtung mit
einem länglichen berührungsempfindlichen Bedienelement (1), welches zumindest in ein mittleres Segment (1-3) und zwei beidseitig neben dem mittleren Segment (1-3) angeordnete Außensegmente (1-1, 1-2) unterteilt ist, und
einer Erfassungseinrichtung (2), die eingerichtet ist, auf einer Bedienfläche (9) des Bedienelements (1) ausgeführte Bediengesten zu erfassen,
die Erfassungseinrichtung (2) eingerichtet ist, sowohl auf dem mittleren Segment (1-3) als auch auf beiden Außensegmenten (1-1, 1-2) jeweils verschiedene Bediengesten, die jeweils sowohl eine Gleitgeste als auch eine Tippgeste umfassen, unterscheidbar zu erfassen und
die Bedienvorrichtung eine mit der Erfassungseinrichtung (2) gekoppelte Steuereinrichtung (3) umfasst, die eingerichtet ist, ein der erfassten Bediengeste zugeordnetes Steuersignal für eine der erfassten Bediengeste zugeordnete Funktion zu erzeugen,
**dadurch gekennzeichnet, dass**
die Steuereinrichtung (3) eingerichtet ist, einen Bedienkontext zu erfassen und das der erfassten Bediengeste zugeordnete Steuersignal für die der erfassten Bediengeste zugeordnete Funktion in Abhängigkeit von dem erfassten Bedienkontext zu erzeugen, wobei die Bediengesten globale Bediengesten und kontextabhängige Bediengesten umfassen, wobei die Steuereinrichtung (3) eingerichtet ist, einer erfassten globalen Bediengeste unabhängig vom empfangenen Bedienkontext ein der globalen Bediengeste zugeordnetes Steuersignal für eine der globalen Bediengeste zugeordnete Funktion zu erzeugen und für eine erfasste kontextabhängige Bediengeste in Abhängigkeit von dem Bedienkontext ein Steuersignal zu erzeugen, welches einer Funktion zugeordnet ist, die von dem empfangenen Bedienkontext abhängt, wobei die Erfassungseinrichtung (2) eingerichtet ist, kontextabhängige Bediengesten nur bei Berührungen des mittleren Segments (1-3) des Bedienelements (1) zu erfassen.

2. Bedienvorrichtung nach Anspruch 1,
**dadurch gekennzeichnet, dass**
dem Steuersignal ein Parameter der zugeordneten Funktion zugeordnet ist und die Steuereinrichtung (3) eingerichtet ist, den Wert des Parameters in Abhängigkeit von einer Länge der Gleitgeste und/oder einer Position der Tippgeste auf dem Bedienelement (1) zu bestimmen.

3. Bedienvorrichtung nach Anspruch 2,
**dadurch gekennzeichnet, dass**
die Steuereinrichtung (3) eingerichtet ist, den Wert des Parameters in Abhängigkeit von einer Dauer eines Berühr-Zeitintervalls der Tippgeste zu bestimmen.

4. Bedienvorrichtung nach einem der vorhergehenden Ansprüche,
**dadurch gekennzeichnet, dass**
das Bedienelement (1) durch einen haptisch wahrnehmbaren Segmenttrenner (7) in das mittlere Segment (1-3) und die beiden Außensegmente (1-1, 1-2) unterteilt ist.

5. Fahrzeug mit einer Bedienvorrichtung nach einem der vorhergehenden Ansprüche.

6. Fahrzeug nach Anspruch 5,
**dadurch gekennzeichnet, dass**
das Fahrzeug ferner eine benachbart zur Bedienvorrichtung angeordnete Anzeigevorrichtung (4) aufweist.

7. Fahrzeug nach Anspruch 6,
**dadurch gekennzeichnet, dass**
die Anzeigevorrichtung (4) eine Anzeigefläche (8) umfasst und die Anzeigefläche (8) und die Bedienfläche (9) in einer Querschnittsebene einen Winkel einschließen, der in einem Bereich von 160° bis 100° liegt, insbesondere in einem Bereich von 130° bis 110°.

8. Verfahren zum Erfassen einer Bediengeste und zum Erzeugen eines Steuersignals, bei dem
eine auf einer Bedienfläche (9) eines länglichen berührungsempfindlichen Bedienelements (1) ausgeführte Bediengeste erfasst wird,
wobei das Bedienelement (1) zumindest in ein mittleres Segment (1-3) und zwei beidseitig neben dem mittleren Segment (1-3) angeordnete Außensegmente (1-1, 1-2) unterteilt ist,
wobei zwischen verschiedenen Bediengesten unterschieden wird und
wobei die verschiedenen Bediengesten sowohl auf dem mittleren Segment (1-3) als auch auf beiden Außensegmenten (1-1, 1-2) ausgeführte Bediengesten umfassen, die jeweils sowohl eine Gleitgeste als auch eine Tippgeste umfassen, und
ein der erfassten Bediengeste zugeordnetes Steuersignal für eine der erfassten Bediengeste zugeordnete Funktion erzeugt wird,
**dadurch gekennzeichnet, dass**
ein Bedienkontext erfasst wird und das der erfassten Bediengeste zugeordnete Steuersignal für die der erfassten Bediengeste zugeordnete Funktion in Abhängigkeit von dem erfassten Bedienkontext erzeugt wird, wobei die Bediengesten globale Bediengesten und kontextabhängige Bediengesten umfassen, wobei einer erfassten globalen Bediengeste unabhängig vom empfangenen Bedienkontext ein der globalen Bediengeste zugeordnetes Steuersignal für eine der globalen Bediengeste zugeordnete Funktion erzeugt wird und für eine erfasste kontextabhängige Bediengeste in Abhängigkeit von dem Bedienkontext ein Steuersignal erzeugt wird, welches einer Funktion zugeordnet ist, die von dem empfangenen Bedienkontext abhängt, wobei kontextabhängige Bediengesten nur bei Berührungen des mittleren Segments (1-3) des Bedienelements erzeugt werden.

## Claims

1. Operator control apparatus comprising
an elongate touch-sensitive operating element (1) which is divided at least into a central segment (1-3) and two outer segments (1-1, 1-2) arranged on either side next to the central segment (1-3), and
a detection device (2) which is designed to detect operating gestures carried out on an operating surface (9) of the operating element (1),
the detection device (2) is designed to distinguishably detect, on the central segment (1-3) and also on both outer segments (1-1, 1-2), different operating gestures, each comprising both a sliding gesture and a tapping gesture, and
the operator control apparatus comprises a control device (3) coupled to the detection device (2), which control device is designed to generate a control signal associated with the detected operating gesture for a function associated with the detected operating gesture,
**characterized in that**
the control device (3) is designed to detect an operating context and to generate, depending on the detected operating context, the control signal associated with the detected operating gesture for the function associated with the detected operating gesture, wherein the operating gestures comprise global operating gestures and context-dependent operating gestures, wherein the control device (3) is designed, a detected global operating gesture, independently of the received operating context, to generate a control signal associated with the global operating gesture for a function associated with the global operating gesture and to generate, depending on the operating context, a control signal for a detected context-dependent operating gesture, which control signal is associated with a function that depends on the received operating context, wherein the detection device (2) is designed to detect context-dependent operating gestures only when the central segment (1-3) of the operating element (1) is touched.

2. Operator control apparatus according to claim 1,
**characterized in that**
a parameter of the associated function is associated with the control signal and the control device (3) is designed to determine the value of the parameter depending on a length of the sliding gesture and/or a position of the tapping gesture on the operating element (1).

3. Operator control apparatus according to claim 2,
**characterized in that**
the control device (3) is designed to determine the value of the parameter depending on a duration of a touch time interval of the tapping gesture.

4. Operator control apparatus according to any of the preceding claims,
**characterized in that**
the operating element (1) is divided into the central segment (1-3) and the two outer segments (1-1, 1-2) by a haptically perceptible segment separator (7).

5. Vehicle comprising an operator control apparatus according to any of the preceding claims.

6. Vehicle according to claim 5,
**characterized in that**
the vehicle further comprises a display device (4) arranged adjacently to the operator control apparatus.

7. Vehicle according to claim 6,
**characterized in that**
the display device (4) comprises a display surface (8) and the display surface (8) and the operating surface (9) enclose an angle in a cross-sectional plane which is in a range of 160° to 100°, in particular in a range of 130° to 110°.

8. Method for detecting an operating gesture and for generating a control signal, in which
an operating gesture carried out on an operating surface (9) of an elongate touch-sensitive operating element (1) is detected,
wherein the operating element (1) is divided at least into a central segment (1-3) and two outer segments (1-1, 1-2) arranged on either side next to the central segment (1-3),
wherein a distinction is made between different operating gestures and
wherein the different operating gestures comprise operating gestures, carried out on the central segment (1-3) and also on both outer segments (1-1, 1-2), each comprising both a sliding gesture and a tapping gesture, and
a control signal associated with the detected operating gesture is generated for a function associated with the detected operating gesture,
**characterized in that**
an operating context is detected and the control signal associated with the detected operating gesture for the function associated with the detected operating gesture is generated depending on the detected operating context, wherein the operating gestures comprise global operating gestures and context-dependent operating gestures, wherein, a detected global operating gesture, independently of the received operating context, a control signal associated with the global operating gesture is generated for a function associated with the global operating gesture and, depending on the operating context, a control signal is generated for a detected context-dependent operating gesture, which control signal is associated with a function that depends on the received operating context, wherein context-dependent operating gestures are generated only when the central segment (1-3) of the operating element is touched.

## Revendications

1. Dispositif de manipulation comportant
un élément de manipulation (1) allongé sensible au toucher, lequel est divisé au moins en un segment central (1-3) et deux segments extérieurs (1-1, 1-2) disposés de part et d'autre du segment central (1-3), et
un appareil de détection (2) qui est configuré pour détecter des gestes de manipulation exécutés sur une surface de manipulation (9) de l'élément de manipulation (1),
l'appareil de détection (2) est configuré pour détecter de manière différenciable, aussi bien sur le segment central (1-3) que sur les deux segments extérieurs (1-1, 1-2), respectivement différents gestes de manipulation qui comprennent respectivement aussi bien un geste de glissement qu'un geste d'appui, et
le dispositif de manipulation comprend un appareil de commande (3) couplé à l'appareil de détection (2), lequel appareil de commande est configuré pour générer un signal de commande associé au geste de manipulation détecté pour une fonction associée au geste de manipulation détecté,
**caractérisé en ce que**
l'appareil de commande (3) est configuré pour détecter un contexte de manipulation et pour générer le signal de commande associé au geste de manipulation détecté pour la fonction associée au geste de manipulation détecté en fonction du contexte de manipulation détecté, dans lequel les gestes de manipulation comprennent des gestes de manipulation généraux et des gestes de manipulation dépendant du contexte, dans lequel l'appareil de commande (3) est configuré pour générer, d'un geste de manipulation général détecté, indépendamment du contexte de manipulation reçu, un signal de commande associé au geste de manipulation général pour une fonction associée au geste de manipulation général et pour générer, pour un geste de manipulation détecté dépendant du contexte, en fonction du contexte de manipulation, un signal de commande qui est associé à une fonction dépendant du contexte de manipulation reçu, dans lequel l'appareil de détection (2) est configuré pour détecter des gestes de manipulation dépendant du contexte uniquement en cas de contact avec le segment central (1-3) de l'élément de manipulation (1).

2. Dispositif de manipulation selon la revendication 1,
**caractérisé en ce que**
un paramètre de la fonction associée est associé au signal de commande et l'appareil de commande (3) est configuré pour déterminer la valeur du paramètre en fonction d'une longueur du geste de glissement et/ou d'une position du geste d'appui sur l'élément de manipulation (1).

3. Dispositif de manipulation selon la revendication 2,
**caractérisé en ce que**
l'appareil de commande (3) est configuré pour déterminer la valeur du paramètre en fonction d'une durée d'un intervalle de temps de contact du geste d'appui.

4. Dispositif de manipulation selon l'une des revendications précédentes, **caractérisé en ce que**
l'élément de manipulation (1) est divisé en le segment central (1-3) et les deux segments extérieurs (1-1, 1-2) par un séparateur de segments (7) perceptible au toucher.

5. Véhicule automobile comportant un dispositif de manipulation selon l'une des revendications précédentes.

6. Véhicule selon la revendication 5,
**caractérisé en ce que**
le véhicule présente en outre un dispositif d'affichage (4) disposé de manière adjacente au dispositif de manipulation.

7. Véhicule selon la revendication 6,
**caractérisé en ce que**
le dispositif d'affichage (4) comprend une surface d'affichage (8) et la surface d'affichage (8) et la surface de manipulation (9) forment, dans un plan de section transversale, un angle qui se situe dans une plage allant de 160° à 100°, en particulier dans une plage allant de 130° à 110°.

8. Procédé pour la détection d'un geste de manipulation et pour la génération d'un signal de commande, dans lequel
un geste de manipulation exécuté sur une surface de manipulation (9) d'un élément de manipulation (1) allongé sensible au toucher est détecté,
dans lequel l'élément de manipulation (1) est divisé au moins en un segment central (1-3) et deux segments extérieurs (1-1, 1-2) disposés de part et d'autre du segment central (1-3),
dans lequel la distinction est faite entre différents gestes de manipulation et
dans lequel les différents gestes de manipulation comprennent des gestes de manipulation exécutés aussi bien sur le segment central (1-3) que sur les deux segments extérieurs (1-1, 1-2), lesquels gestes de manipulation comprennent respectivement aussi bien un geste de glissement qu'un geste d'appui, et
un signal de commande associé au geste de manipulation détecté est généré pour une fonction associée au geste de manipulation détecté,
**caractérisé en ce que**
un contexte de manipulation est détecté et le signal de commande associé au geste de manipulation détecté est généré pour la fonction associée au geste de manipulation détecté en fonction du contexte de manipulation détecté, dans lequel les gestes de manipulation comprennent des gestes de manipulation généraux et des gestes de manipulation dépendant du contexte, dans lequel, d'un geste de manipulation général détecté, indépendamment du contexte de manipulation reçu, un signal de commande associé au geste de manipulation général est généré pour une fonction associée au geste de manipulation général, et un signal de commande associé à une fonction dépendant du contexte de manipulation reçu est généré pour un geste de manipulation détecté dépendant du contexte en fonction du contexte de manipulation, dans lequel des gestes de manipulation dépendant du contexte sont générés uniquement en cas de contact avec le segment central (1-3) de l'élément de manipulation.
